# EUROPEAN PATENT SPECIFICATION

(11) **EP 4 574 792 B1**
(45) Date of publication and mention of the grant of the patent: **07.10.2026**
(21) Application number: 23219708.7
(22) Date of filing: 22.12.2023
(51) Int. Cl.: C04B 28/02

(54) **METHOD FOR SIMULTANEOUS PRODUCTION OF ARTIFICIAL AGGREGATES AND SALT FROM SOLID WASTE INCINERATOR PLANTS**
VERFAHREN ZUR GLEICHZEITIGEN HERSTELLUNG VON KÜNSTLICHEN AGGREGATEN UND SALZ AUS MÜLLVERBRENNUNGSANLAGEN
PROCÉDÉ DE PRODUCTION SIMULTANÉE D'AGRÉGATS ARTIFICIELS ET DE SEL À PARTIR D'INSTALLATIONS D'INCINÉRATION DE DÉCHETS SOLIDES

(43) Date of publication of application: 25.06.2025
(73) Proprietor: A2A Ambiente SpA, 25124 Brescia (BS) (IT); Mapei SpA, 20158 Milano (MI) (IT)
(72) Inventor: FERRARI, Giorgio, 20158 MILANO (MI) (IT); PARMINI, Enrico, 20158 MILANO (MI) (IT); DELLA PASQUA, Emanuele, 20158 MILANO (MI) (IT); SQUINZI, Marco, 20158 MILANO (MI) (IT); SCOTTI, Sergio, 25124 BRESCIA (BS) (IT); BAIGUINI, Giovanni, 25124 BRESCIA (BS) (IT)
(74) Representative: Bianchetti & Minoja with Trevisan & Cuonzo IPS SRL

(56) References cited:
- CN-A- 109 455 738
- T. MANGIALARDI: "Effects of a washing pre-treatment of municipal solid waste incineration fly ash on the hydration behaviour and properties of ash-Portland cement mixtures", vol. 16, no. 2, 1 April 2004 (2004-04-01), GB, pages 45 - 54, XP093165053, ISSN: 0951-7197, Retrieved from the Internet <URL:https://dx.doi.org/10.1680/adcr.16.2.45.36254> [retrieved on 20240523], DOI: 10.1680/adcr.16.2.45.36254

## Description

The present invention concerns a method for the simultaneous production of artificial aggregates and alkali chlorides from ashes of both municipal and industrial solid waste incinerator plants, and specifically from the fly ash (FA) that are classified as hazardous waste. The resulting aggregates can be used for producing cementitious conglomerates, such as concrete and mortars, and for other civil engineering applications, such as subbases for roads and filling materials. Alkali chlorides can be used as de-icing agent for roads.

### Background of the invention

The annual production of municipal solid waste MSW is estimated to be 2.01 billion tonnes and it is expected to grow to 3.40 billion tonnes by 2050. (from "What a Waste 2.0, A Global Snapshot of Solid Waste Management to 2050", 2018, The World Bank). Incineration has gained popularity over landfill as a key solution to reduce the massively increasing volumes of MSW generation worldwide. Nevertheless, incineration is not the end solution. Typically, for every 1000 kg of burnt MSW, 120-200 kg bottom ash (BA) and 10-40 kg fly ash (FA) are produced.

Focusing on incineration fly ashes (FA), they are the most critical fraction because are enriched with a wide range of heavy metals and soluble salts and are classified as hazardous waste. A typical composition of FA from MSWI is shown in Table 1.

**Table 1. Typical contaminants in MSWI fly ash (Wu, H.Y. and Ting, Y.P., "Metal extraction from municipal solid waste (MSW) incinerator fly ash - Chemical leaching and fungal bioleaching", Enzyme Microb. Technol. 2006, 38, 839-847).**

| **Contaminant** | **Concentration (mg/kg)** |
|---|---|
| Ba | 539 |
| Cd | 95 |
| Co | 14 |
| Cr | 72 |
| Cu | 570 |
| Mn | 309 |
| Ni | 22 |
| Pb | 2000 |
| Zn | 6288 |
| Sr | 151 |
| Chlorides | 157200 |

The disposal of FA remains a major issue from the environmental point of view and several solutions have been proposed to solve this problem. Among the different techniques for the treatment of FA, solidification/stabilization methods (S/S) have been widely applied. Portland cement or other cementitious binders are generally used, possibly in combination with other additives and/or chemicals, for encapsulating FA into a solid matrix and reducing the leachability of heavy metals and other contaminants, including POPs (Persistent Organic Pollutants). By this way, it is possible to reduce the environmental and health risks associated with these wastes and to find safer ways for their disposal and/or possible options for their recover and reuse.

JP 3685553B2 describes a method for solidification of fly ash or mixed fly ash/bottom ash with cement and additives to prevent hydrogen development and make possible to use the solidified materials for application as agricultural roads and substitute for cement and sands during secondary product processing.

EP 582008A1 describes a method utilizing MSW ash, including fly ash, where the fly ash is preliminary treated with an alkali silicate to fix heavy metals and then by adding cement or other binders to form pellets which could be used as aggregates in asphalt of concrete mixes.

One limit of the S/S method is that this technology is not suitable for wastes containing soluble salts, such as chlorides, because they are not precipitated and immobilized by the cementitious binders. Moreover, the high content of chlorides of FA represents a strong limitation for potential applications of solidified FA for both the impact on the environment and the corrosion they could induce in steel reinforcement if used as aggregates for concrete applications.

Washing of MSWI FA to remove chlorides and other soluble salts is therefore an essential requirement for downstream useful applications, particularly as secondary raw materials for road foundation, after stabilization with cement. The washed fly ash may be recovered by filtration and treated with cement for useful applications and the washing wastewaters are fed to a wastewater treatment system. (E. Mulder, "Pre-Treatment of MSWI Fly ash for Useful Application", Waste Management, 1996, 16, [1-3], 181,184).

Alternatively, chlorides, heavy metals and other enriched compounds wastewater can be concentrated, after FA washing, by a multi effect evaporation salt-separation treatment to obtain solid sodium chloride, as described in CN 112871961A. The main drawback of this method is that all the water-soluble heavy metals and other water-soluble compounds are concentrated and co-precipitated together with sodium chloride, making the resulting salt not suitable for commercial application.

CN 113231446B describes a treatment system of MSW where the FA washing wastewaters containing chlorides, heavy metals salts and other water-soluble compounds are treated with a post-treatment subsystem comprising an inorganic membrane filtration reaction tank, an alkali regulation reaction tank, a heavy metal removal reaction tank and a hardness regulation reaction tank which are connected in sequence. Particularly, the heavy metals present in the FA washings are adsorbed in the heavy metal removal reaction tank by a specific COF (covalent organic framework) porous polymer material with a memory function for selectively combining and removing target heavy metals. The preparation of such COF comprises the following steps: a) coordinating the target metal ion with the organic ligand to synthesize a metal cluster capable of being further polymerized; b) adding a crosslinking agent to crosslink with the metal clusters to form a porous polymer material; c) removing metal ions from the polymer material by acid treatment to form a porous polymer material with a memory function. The porous material with a memory function is then combined with the FA wastewaters in the heavy metal reaction tank. After the reaction, the stream from the heavy metal reaction tank is filtered and the adsorption material is recovered and treated in an acidification reaction tank to remove the adsorbed heavy metals from the porous polymer material which is recovered and recycled it in the process. The downstream from the heavy metal removal reaction tank is then treated with a mechanical vapor recompression evaporator MVR to produce solid sodium and potassium chloride, with secondary components sodium carbonate and sodium sulphate and other impurities at trace levels. The main disadvantage of this system, beside the use of COF whose preparation requires a specific reagents and chemical synthesis, is that a wastewater stream of acidic eluates containing high concentration of heavy metals is still produced and it must be properly treated or disposed.

T.Mangialardi ("Effects of a washing pre-treatment of municipal solid waste incineration fly ash on the hydration behaviour and properties of ash-Portland cement mixtures", ADVANCES IN CEMENT RESEARCH, vol. 16, no. 2, 1 April 2004, pages 45-54) describes washing pre-treatment of municipal solid waste incineration (MSWI) fly ash. Portland cement mixtures rich in MSWI fly ash (55 wt% of total solids) were investigated in view of a possible reuse of such solidified products as concrete aggregates.

### Description of the invention

The present invention concerns a novel method for treating ashes, specifically fly ashes (FA) from municipal (MSW) and industrial solid waste incineration plants.

The term "ash", as used herein, refers both to fly ash or to other ash, including bottom ash.

MSW and Industrial waste includes for example household and similar commercial, industrial and institutional waste including separately collected fractions, wastes from waste management facilities, included waste water treatment plants, wastes from wood processing included production of panels, furniture, pulp, paper and cardboard, waste packaging, rejected materials from industrial facilities."

Particularly, the new method concerns an integrated double-stage solidification/stabilization and desalting process to treat ash with an inorganic binder and water to simultaneously produce artificial aggregates and solid alkali chloride salts, including sodium, calcium and potassium chlorides. The artificial aggregates can be used for both the production of cementitious conglomerates, such as concrete and mortars, and other civil engineering applications, such as subbases for roads and filling materials, while the solid alkali chlorides can be used as de-icing agent for roads. Additives for improving the mechanical characteristics of the artificial aggregates can also be used. Moreover, the process doesn't produce any byproducts or waste, neither liquid nor solid. Both the final products, the artificial aggregate and the solid alkali chloride salts, meet the requirements for End of Waste materials (EoW) and cease their qualification of waste and are classified as materials. Moreover, they comply with the European technical standards for both aggregates (EN 12620, EN 13139, EN 13242, EN 13043) and de-icing salts (EN 16811).

Different from the prior art, where the washing process of ash, particularly of fly ash, has always been considered a necessary step to be preliminary accomplished before any other treatment, in the present invention the washing process to remove chlorides and other water-soluble compounds is accomplished after the ash have been treated with an inorganic binder in a first-stage solidification/stabilization step to produce cementitious granular materials. This new approach revealed surprisingly effective in both removing chlorides and other water-soluble compounds from ash and reducing the presence of contaminants in the final solid alkali chloride. Therefore, the present invention allows the simultaneous production of high quality, low leaching artificial aggregates and high purity solid alkali chloride, without the production of any waste stream, nor solid neither liquid. Indeed, all the streams originated by the washing process are fully recycled and incorporated into the first-stage solidification/stabilization step.

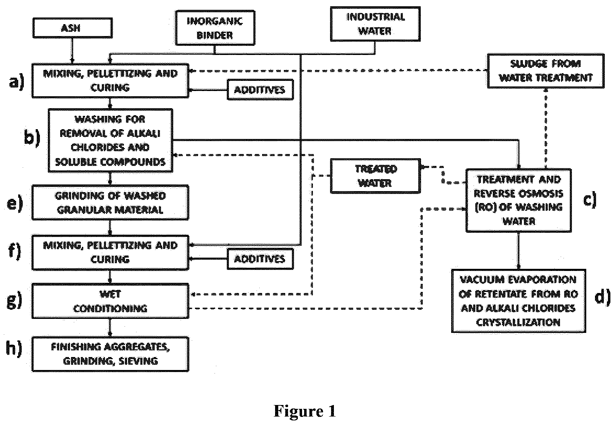

The general layout of the process of the present invention is shown in Figure 1.

The method of the invention comprises: a) mixing and pelletizing ash with inorganic binders and water and, optionally additives, to obtain a hardened granular material, b) washing the hardened granular materials produced in step a) with water to remove alkali chlorides and other soluble compounds, c) treating the washing water from step b) over a reverse osmosis membrane, d) drying the concentrate from step c) with evaporator to obtain solid alkali chloride based salt, e) grinding the washed granular material from step b) to obtain a powder, f) mixing and pelletizing the powdered granular material from step e) with a cementitious inorganic binder, water and optionally additives to obtain, after curing, artificial aggregates, g) optionally, wet conditioning the artificial aggregates by insufflating air or CO₂ to lower the value of pH below pH = 12 and h) optionally finishing by grinding and sieving the artificial aggregates to the desired final particle size.

Water and the solid residues originated during the process are continuously recycled in steps from a) to g).

Ashes are mixed with water, an inorganic binder and optionally additives in a mixer in step a), then processed in a pellettizing disc or pan granulator and the resulting granular material is cured in air at room temperature or by steam-curing.

The hardened granular material produced in step a) is sequentially washed in step b) with water, with a water-to-hardened granular material mass ratio from 80 to 1, preferably from 40 to 2, more preferably from 20 to 5.

The washing water resulting from step b) is preferably treated with gaseous CO₂ or other acidic solutions to lower the pH, clariflocculated with the addition coagulating agents and flocculants, filtered to eliminate suspended solids and treated over a reverse osmosis membrane in step c), the permeate pure water being recycled for subsequent washing cycles in step b) and the final concentrate being dried by vacuum driers or evaporators to obtain solid alkali chlorides in step d).

Typical inorganic binders useful for the process are Portland cement, calcium aluminate cement, calcium sulfoaluminate cement, magnesia cement, slag, fly ash from coal power plants and mixtures thereof, including the possibility of blending with other supplementary cementitious materials such as silica-fume, natural pozzolanas, calcined clays and limestone.

Additives can be added during the mixing processes of the invention to impart specific characteristics to the granular material. For example, accelerators, activators and retarders and mixture thereof can be used to control the setting and hardening time of the fresh granular materials. Plasticizers, superplasticizers, hydrophobic agents, air-entraining agents and mixtures thereof may also be added.

Accelerators include inorganic and organic compounds such as nitrates, thiocyanates, formates, in the form of their alkaline and earth-alkaline salts. Other useful accelerators include alkanolamines such as, for example, triethanolamine, diethanolamine and triisopropanolamine. Other setting and hardening accelerators include nanocomposites of metal silicate hydrates and polycarboxylate ether polymers (nano-Me-S-H/PCE), such as those described in WO2010026155A1 and EP3080052.

Activators, useful to stimulate the hydration of supplementary cementitious materials and to improve the mechanical characteristics of the hardened granular materials, include alkali silicate, alkali hydroxides and activators based on hydrated cementitious phases, such as those described in EP3687951.

Retarders can be conveniently employed when a delay in the setting time of the granular materials is required. Among these, carbohydrates and other sugar derivatives substances, including sucrose, gluconate, molasses, dextrin can be used. Other retarding agents include phosphonates, other phosphonic acid derivatives and borates.

Formulation with accelerators, activators and retarders can be used in mutual combination to increase the final strength of the granular materials. Examples of these formulations are those described in US 2019/0376422A1 and WO2023/285386A1.

Moreover, plasticizers and superplasticizers can be added to control the consistency of the fresh cementitious mixture and to reduce the amount of water during the mixing and the granulation/pellettizing processes. Plasticizers and superplasticizers include gluconates, lignosulfonates, condensates between naphthalene sulfonate and formaldehyde, condensates between melamine sulfonate and formaldehyde, polycarboxylate ethers, polyphosphonate ethers and mixture thereof.

Other useful classes of additives include hydrophobic agents like fatty acid salts, stearate derivatives, silanes, siloxanes, air entraining agents, antibacterial agents, coloring agents, pigments and mixture thereof.

Cement superplasticizers and hydrophobic agents are typically added to continuous mixer at the dosage from 0.1 to 10 per cent by mass of cementitious binder.

Hydrophobic agents comprise salts of fatty acids, silanes, siloxanes and mixtures thereof.

Accelerating/activating additives are added to the continuous mixer at the dosage from 0.1 to 20 per cent by mass of cementitious binder.

Examples of accelerating/activating additives comprise sodium thiocyanate, calcium nitrate, alkanolamines, metal silicate hydrate nano-seeds and mixtures thereof.

All the afore mentioned additives can be used in mutual combination to obtain the desired final result.

Mixing can be accomplished with discontinuous and continuous mixers. Among continuous mixers plowshare mixers are preferred. The mixing conditions (ratios of ash/binder/water/additives, mixing time, mixing speed) are selected to obtain, at the end of the mixing process, a moist powder material with the consistency of a wet unbound soil, which is then transferred to the pan granulator/pellettizing disc. Here, due to the rotational movement and the inclination of the disc, the individual particles of the mixture start to agglomerate forming grains. The selected size of the final grains can be conveniently controlled by regulating the composition of the original mixture, the residence time in the pan granulator and its inclination.

The freshly produced granular material is accumulated in suitable containers for curing and hardening. The time of curing depends on many factors, including the temperature, the type and the amount of binder, the amount of mixing water and the presence of additives. Curing time can be reduced by using steam-curing process, at temperature in the range from 40 °C to 70 °C. For curing at room temperature, the time of curing may range from 48 hours to 90 days, preferably from 3 days to 60 days, more preferably for 7 days to 28 days. In the steam-curing process, curing time may range from 2 hours to 48 hours, preferably from 6 hours to 24 hours, more preferably from 10 hours to 16 hours. The containers can be open or kept closed under venting and/or vacuum to avoid the accumulation of possible dangerous concentrations of gaseous hydrogen resulting from the decomposition of metallic aluminum present in ash by the wet alkaline conditions of the granular materials.

Once the granular materials obtained by the first stage solidification/stabilization process of step a) has gained sufficient mechanical strength to be moved and stockpiled, it is transferred to a washing tank, where it is washed with water to remove chlorides and other water-soluble compounds, as indicated in step b) of Fig. 1.

Washing of the first-stage granulation step in step b) is accomplished by recirculating water through the stockpiled granular material until the residual content of chlorides and other water-soluble compounds is conveniently reduced. One-step washing with large amount of water can be used, but multi-step washings with reduced amount of water are more efficient. Typical water to granular materials washing weight ratios for each washing step range from 20 to 1, preferably from 15 to 3, more preferably from 11 to 5. The efficiency of washing depends also on the density and the size of the granular material. Granular material must be strong enough to resist stockpiling in the washing tank but must not be so dense to prevent washing water to permeate the capillary pores of the cementitious binding phase and perform an effective removal of chlorides and other water-soluble compounds. The optimum conditions depend on many factors, including the amount and the type of binder used for the first-stage solidification/stabilization process of step a). High dosage of binder ensures high early strength but creates a denser, low permeable microstructure of the resulting granular material. Typical mixing ash-to-binder weight ratios for the first-stage S/S step range from 50 to 3, preferably from 20 to 5, more preferably from 10 to 7 and the water-to-binder ratio is ranging from 0.5 to 4, preferably from 0.7 to 3, more preferably from 1 to 2.

The advantage of the present invention over the previously developed processes for treating ash is that ash are washed after the first stage S/S step. By this way, most of the heavy metals are precipitated by the high pH as calcium salts and/or hydroxides and are incorporated in the cementitious microstructure. Consequently, the leaching of heavy metals is strongly reduced and the concentrations of dissolved heavy metals in the final washing waters of the process of present invention is definitely lower compared with those typical of the previous processes.

This difference represents the fundamental requirement for obtaining a solid alkali chloride salts characterized by low impurities concentration without any further separation process and without the production of large amounts of waste containing heavy metals.

The washing waters containing dissolved alkali chlorides and other soluble compounds from step b) are then concentrated with a reverse osmosis (RO) membrane, as indicated in step c) of Fig. 1. Before passing over the RO membrane, the washing waters can be filtered to remove minor amount of powdered granular materials possibly originated during the washing process of step b) and the residual sludge are completely recycled in step a), as indicated by the dotted line in Fig. 1. Moreover, the pH of the washing water can be properly adjusted by acid addition and/or CO2 insufflation to the optimum conditions of pH selected for the step c).

The permeate from the RO process of step c) consists of deionized water, which is totally recycled in the process as washing water, as indicated by the dotted line in Fig. 1. The retentate from the RO process of step c) consists of a concentrated solution of alkali chlorides and traces of other dissolved salts. The final concentration of the retentate depends on the type of membrane and the operating conditions, such as the temperature, the type of membrane, the difference of pressure, etc. Typically, at the end of the RO process the final concentration, expressed as per cent of total dissolved solids, is in the range from 5 to 50 %, preferably from 10 to 40 %, more preferably from 15 to 30 %.

The concentrated solution of chlorides and other water-soluble compounds from the step c) of RO osmosis process is finally dried by vacuum evaporation process or mechanical vapor recompression MVR process, as indicated in step (d) of Fig. 1. The resulting solid material consists essentially of crystallized alkali chlorides, with minor amount of calcium salts and traces of heavy metals and other contaminants.

The washed, dechlorinated granular material from step (b), due to the low binder content and poor mechanical strength, is not suitable to be used as aggregates. To improve their mechanical characteristics, the granular material from washing of step b) is ground to powder ( e..g. by means of grinding mills such as ball mills, hammer mills or pendulum mills) with diameter lower than 2 mm, as indicated in step (e) of Fig. 1 and processed with additional amount of inorganic binder and water in a second-stage solidification/stabilization step, by using a continuous mixer and a pellettizing disc or pan granulator, as indicated in step (f) of Fig. 1. In this second-stage solidification/stabilization step, the mixing ratios between the powder ground material (PGM) resulting from steps (b) and (e), the inorganic binder and the mixing water must be properly selected to give granular materials which harden in short time and are characterized by final adequate mechanical strength for the final use as aggregates for the production of cementitious conglomerates, such as concrete and mortars, and other civil engineering applications, such as subbases for roads and filling materials. The mixing ratio of the powder ground material PGM with the binder in the second granulation stage of step e) can be varied in a wide range, according to the type of binder and the mechanical strength characteristics required for the final artificial aggregates. For the second-stage solidification/stabilization step f), the same type of binders used in the first-stage solidification/stabilization step b) can be conveniently used, or mixture thereof. Typical mixing weight PGM-to-binder ratios range from 10 to 1.5, preferably from 7 to 2, more preferably from 5 to 3.

Typical water-to-binder ratios for the second-stage solidification/stabilization step f) are a water-to-binder ratio ranging from 0.2 to 2, preferably from 0.4 to 1.5, more preferably from 0.6 to 1.

In the second-stage solidification/stabilization step f), the same additives already described for the first-stage solidification/stabilization step b) can be conveniently used. Particularly, plasticizers and superplasticizers can be used to reduce the mixing water and to obtain final granular material characterized by high mechanical performance, low porosity and low leaching of contaminants, such as those described in EP 1858821B1. Moreover, accelerators and activators to improve the early strength development are particularly useful in case where binders rich in supplementary cementitious materials are employed. Suitable additives of this type are those described in EP3080052 and EP 3687951. Another class of additives which can be conveniently used are those consisting of hydrophobic agents, to reduce the water migration through the capillary pores of the granular material.

The freshly produced granular material produced in step f) is accumulated in suitable containers for curing and hardening. The time of curing depends on many factors, including the temperature, the type and the amount of binder, the amount of mixing water and the presence of additives. Curing time can be reduced by using steam-curing process, at temperature in the range from 40 °C to 70 °C. For curing at room temperature, the time of curing can range from 48 hours to 90 days, preferably from 3 days to 60 days, more preferably for 7 days to 28 days. On the other hand, in the steam-curing process, curing time can range from 2 hours to 48 hours, preferably from 6 hours to 24 hours, more preferably from 10 hours to 16 hours.

After curing in step f), the granular material can be optionally subjected to a wet conditioning step g) to reduce the leachability of amphoteric metals by immersion in water ponds where air or CO₂ is insufflated until the pH is lowered below pH = 12.

Finally, the artificial aggregates from step f) and g) can be optionally ground at the desired size in step h).

The characteristic and the advantages of the present invention are further detailed in the following example.

### Example 1

100 parts of FA having the composition and characteristics described in Table 2, were mixed in a laboratory mixer with 10 parts of slag cement CEM III/B, according to EN 197-1 norm.

**Table 2. Composition and leaching characteristics of FA used in Example 1.**

| **Parameter** | **Composition (mg/kg)** | **Leaching (µg/L)** |
|---|---|---|
| Sulphate (SO₄²⁻) | - | 1190000 |
| Chlorides (Cl⁻) | - | 14500000 |
| Copper (Cu) | 810 | 15.1 |
| Zinc (Zn) | 12196 | 323 |
| Nichel (Ni) | 937 | 1.55 |
| Arsenic (As) | 14.2 | 0.9 |
| Cadmium (Cd) | 149 | 11 |
| Chromium tot. (Crtot) | 206 | 310 |
| Lead (Pb) | 30 | 1180 |
| Selenium (Se) | 5.5 | 16 |
| Mercury (Hg) | 3.1 | 5 |
| pH | - | 10.9 |

Leaching test was conducted on the starting FA according to EN 12457-2:2004, by using distilled water as extractant and a L/S = 10. The results of the leaching test of Table 2 indicated that Cd, Crtot, Pb, Se and Hg exceeded the maximum permitted values for reusable waste defined by Italian Decree 05/04/2006, n. 186.

Water was added to the mixture in the first-stage S/S step until a moist powder material with the consistency of a wet unbound soil was obtained. This mixture was then transferred to a pellettizing/granulator pan and transformed into a granular material (step a). The resulting granular material was cured in air at room temperature (20 °C) for 4 weeks and then washed to recycling with four rates of water, each consisting of 1000 parts of deionized water (step b). The four fractions of washing waters were then collected and mixed. After filtration and homogenization, the washing waters were subjected to a reverse osmosis RO process. When the retentate reached the concentration of 25 % of total solids, the RO process was stopped (step c) and the retentate was thermally evaporated under vacuum to obtain 23 parts of solid alkali chloride (20 % humidity), with the composition reported in Table 3 (step d).

**Table 3. Composition of the alkali chloride salt produced according to the Example 1 of the present invention and comparison with a commercial de-icing salt.**

| **Parameter** | **Composition (mg/kg salt)** | |
|---|---|---|
| | **Example 1** | **Commercial de-icing salt** |
| Aluminum (Al) | 14 | 11 |
| Arsenic (As) | < 1 | < 1 |
| Berillium (Be) | < 0.1 | < 0.1 |
| Cadmium (Cd) | < 0.1 | < 0.1 |
| Cobalt (Co) | < 0.1 | < 0.1 |
| Total Chromium (Crₜₒₜ) | 0.6 | 0.5 |
| Copper (Cu) | 1.3 | 1.4 |
| Iron (Fe) | 15.4 | 14 |
| Mercury (Hg) | < 0.02 | < 0.4 |
| Manganese (Mn) | 0.7 | 1 |
| Molibdenum (Mo) | < 0.1 | < 0.1 |
| Nickel (Ni) | 0.3 | 1 |
| Lead (Pb) | 3.2 | 2.3 |
| Antimonium (Sb) | < 1 | < 1 |
| Selenium (Se) | < 0.7 | < 0.7 |
| Stannum (Sn) | < 0.3 | < 0.3 |
| Tallium (Tl) | < 0.6 | < 0.6 |
| Vanadium (V) | < 0.2 | 0.2 |
| Zinc (Zn) | 5 | 2 |

The concentration of the main contaminants of the salt of Example 1 was compared with a commercial de-icing salt for roads. Results indicated that the salt obtained by the process of the present invention had similar concentrations of the different contaminants compared with the commercial de-icing salt. This means that the washing waters according to the process of the invention can be concentrated and dried without further treatment and confirmed the efficiency of the process of the invention in producing de-icing salt from FA with only traces of contaminants.

The washed granular material from the first-stage solidification/stabilization (step b) were dried and ground in a mill to a fineness lower than 2 mm to obtain a powder ground material (PGM) (step e). PGM was mixed with a) 27 % of slag cement CEM III/B, according to EN 197-1 norm, b) 2 % of additive consisting in a superplasticizer based on polycarboxylate ether PCE and c) 2 % of waterproofing agent based on calcium stearate. Enough mixing water to obtain a moist powder material with the consistency of a wet unbound soil was added during the mixing. This mixture was then transferred to a pellettizing/granulator pan and transformed into a granular material (step f). 130 parts of granular material were obtained, which were air-cured at room temperature for 28 days before conditioning with CO₂ bubbling in a recirculating water bath until pH of the granular material was lower than pH = 12 (step g).

The leaching of the resulting granular materials fully complied with the Italian National standard for reusable materials of Decree 05/04/2006, n. 186, as shown in Table 4.

**Table 4. Leaching characteristics of artificial aggregates from Example 1.**

| **Parameter** | **Leaching (µg/L)** |
|---|---|
| Sulphate (SO₄²⁻) | 189000 |
| Chlorides (Cl⁻) | 67400 |
| Copper (Cu) | < 10 |
| Zinc (Zn) | < 50 |
| Nichel (Ni) | < 1 |
| Arsenic (As) | < 0.5 |
| Cadmium (Cd) | < 0.5 |
| Chromium tot. (Crₜₒₜ) | 15.8 |
| Lead (Pb) | 2 |
| Selenium (Se) | 1.6 |
| Mercury (Hg) | < 1 |
| pH | 11.0 |

Leaching test was conducted according to EN 12457-2:2004, by using distilled water as extractant and a L/S = 10.

The physical and mechanical characteristics of the final granular materials were tested according to different methods and the results are shown in Table 5.

**Table 5. Physical and mechanical properties of artificial aggregates produced according to Example 1 of the present invention.**

| **Parameter/Property** | **Unit** | **Value** | **Class according to EN 12620/EN 8520** |
|---|---|---|---|
| Specific gravity | Mg/m³ | 2.33 | MV > 2.3 Mg/m³ |
| Water absorption | % | 2.5 | To be declared |
| Los Angeles | % | 35 | LA35 |
| Freeze/Thawing | % | 3.2 | F4 |
| Alkali/Silica reaction | - | negative | Negative |

These results indicated that the artificial aggregates produced according to the Example 1 are suitable to be used as filling materials, aggregates for concrete and for other civil engineering applications and confirm that the process of the invention allows to simultaneously produce solid alkali chloride suitable for road de-icing applications and artificial aggregates suitable for civil engineering applications.

### Example 2

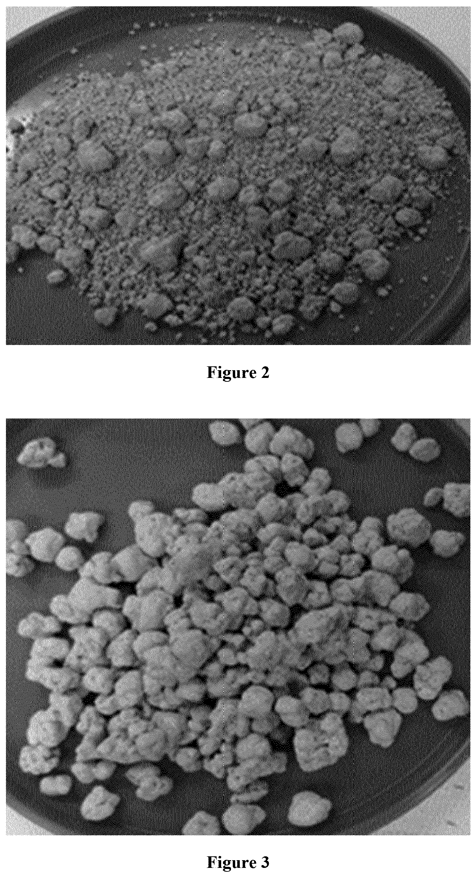

100 parts of FA having the composition and characteristics described in Table 2, were mixed in a laboratory mixer with 10 parts of slag cement CEM III/B, according to EN 197-1 norm. Water was added to the mixture in the first-stage S/S step until a moist powder material with the consistency of a wet unbound soil was obtained. This mixture was then transferred to a pellettizing/granulator pan and transformed into a granular material (step a). The resulting fresh granular material was split in two fractions which were cured in different conditions. The first fraction (Fraction 1) was cured at room temperature of 20 °C, the other fraction (Fraction 2) was steam-cured in saturated oven at 60 °C for 15 hours. After 24 hours from the production of the granular material, both the fractions were separately immersed in water (liquid-to-solid ratio L/S = 10) at room temperature for 24 hours. After this period, water was discharged and replaced by another equivalent amount of clean water. This procedure was repeated twice for a total time of 72 hours of immersion in water. The aspect of the two fractions at the end of the test are shown in Figure 2 (Fraction 1) and in Figure 3 (Fraction 2).

Figure 2 clearly shows that most of the granular material of Fraction 1 was destroyed by the washing process and that 24 hours of curing are not sufficient to gain enough strength for the washing step. On the other hand, Figure 3 indicates that the steam-cured granular material (Fraction 2) is perfectly intact, even after repeated immersion in water for 72 hours. Moreover, the weight loss of Fraction 2 after immersion in water was higher than 30 % compared with the initial value, confirming the effectiveness of the washing process of step b) of the present invention to eliminate the soluble salts.

### Example 3

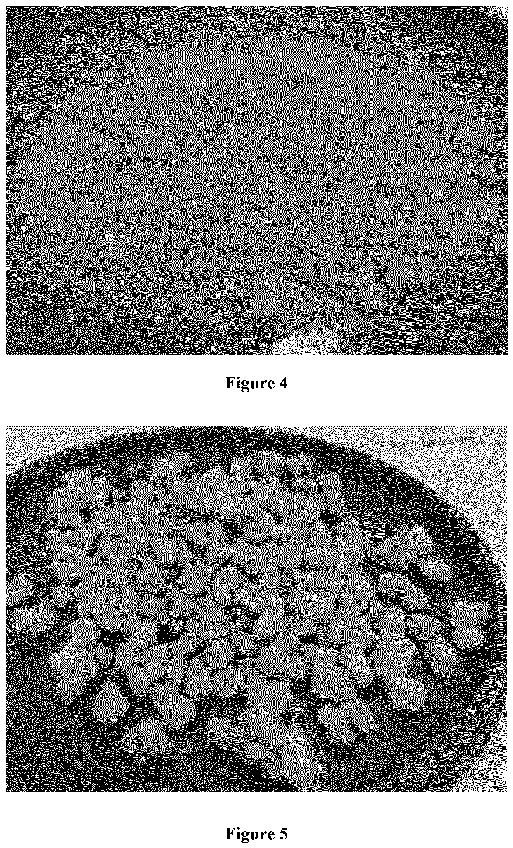

100 parts of FA having the composition and characteristics described in Table 2, were mixed in a laboratory mixer with 10 parts of ground granulated blast furnace slag (GGBFS) and 2 parts of activator Mapecube Geo produced by Mapei. Mapecube Geo is an activator for supplementary cementitious materials produced according EP3687951. Water was added to the mixture in the first-stage S/S step until a moist powder material with the consistency of a wet unbound soil was obtained. This mixture was then transferred to a pellettizing/granulator pan and transformed into a granular material (step a). The resulting fresh granular material was split in two fractions which were cured in different conditions. The first fraction (Fraction 3) was cured at room temperature of 20 °C, the other fraction (Fraction 4) was steam-cured in saturated oven at 60 °C for 15 hours. After 24 hours from the production of the granular material, both the fractions were separately immersed in water (liquid-to-solid ratio L/S = 10) at room temperature for 24 hours. After this period, water was discharged and replaced by another equivalent amount of clean water. This procedure was repeated twice for a total time of 72 hours of immersion in water. The aspect of the two fractions at the end of the test are shown in Figure 4 (Fraction 3) and in Figure 5 (Fraction 4).

Figure 4 clearly shows that most of the granular material of Fraction 3 was destroyed by the washing process and that 24 hours of curing are not sufficient to gain enough strength for the washing step. On the other hand, Figure 5 indicates that the steam-cured granular material (Fraction 4) is perfectly intact, even after repeated immersion in water for 72 hours. Moreover, the weight loss of Fraction 4 after immersion in water was higher than 30 % compared with the initial value, confirming the effectiveness of the washing process of step b) of the present invention to eliminate the soluble salts.

## Claims

1. A method for the simultaneous production of high purity solid alkali chloride and artificial cementitious aggregates from solid waste incinerator plants comprising: a) mixing and pelletizing ash with an inorganic binder and water and, optionally additives, to obtain a hardened granular material, b) washing with water the hardened granular materials produced in step a) to remove alkali chloride and other soluble compounds, c) treating the washing water from step b) over a reverse osmosis membrane, d) drying the concentrate from step c) with evaporator to obtain solid alkali chloride based salt, e) grinding the washed granular material from step b) to obtain a powder, f) mixing the powdered granular material from step e) with an inorganic binder, water and optionally additives and pellettizing and curing to obtain artificial aggregate, g) optionally wet conditioning in water the artificial aggregate of step f) by insufflating air or CO₂ and h) optionally grinding and sieving the artificial aggregate from step f) and step g) to the desired final particle size.

2. A method according to claim 1 wherein the ash is fly ash.

3. A method according to claim 1 or 2 carried out in a closed circuit wherein water and the solid residues originated during the process are continuously recycled in steps from a) to g).

4. A method according to any of the preceding claims wherein in step a) of claim 1 the ashes are mixed with an inorganic binder and water and, optionally, additives in a continuous mixer and sequentially treated in a pellettizing pan to obtain a granular material which is cured at room temperature from 48 hours to 90 days, preferably from 3 days to 60 days, more preferably for 7 days to 28 days.

5. A method according to claim 2 wherein in step a) the FA are mixed with a inorganic binder and water and, optionally, additives in a continuous mixer and sequentially treated in a pellettizing pan to obtain a granular material which is steam-cured at temperature from 40 °C to 70 °C from 2 hours to 48 hours, preferably from 6 hours to 24 hours, more preferably from 10 hours to 16 hours.

6. A method according to any of the preceding claims wherein in step a) the ash-to-binder mass ratio is in the range from 50 to 3, preferably from 20 to 5, more preferably from 10 to 7 and the water-to-binder ratio is ranging from 0.5 to 4, preferably from 0.7 to 3, more preferably from 1 to 2.

7. A method according to any of the preceding claims wherein the inorganic binder is Portland cement, calcium aluminate cement, calcium sulfoaluminate cement, magnesia cement, slag, fly ash from coal power plants and mixtures thereof, including other supplementary cementitious materials, like silica-fume, natural pozzolanas, calcined clays and limestone.

8. A method according to any of the preceding claims wherein the hardened granular material produced in step a) of claim 1 is sequentially washed in step b) with water with water-to-hardened granular material mass ratio from 80 to 1, preferably from 40 to 2, more preferably from 20 to 5.

9. A method according to any of the preceding claims wherein the washing water resulting from step b) of claim 1 is treated with gaseous CO₂ or other acidic solutions to lower the pH, clariflocculated with the addition coagulating agents and flocculants, filtered to eliminate suspended solids and treated over a reverse osmosis membrane in step c), the permeate pure water being recycled for subsequent washing cycles in step b) and the final concentrate being dried by vacuum driers or evaporators to obtain solid alkali chloride in step d).

10. A method according to any of the preceding claims wherein the washed granular material from step b) of claim 1 is ground to powder with fineness lower than 2 mm in step e).

11. A method according to claim 10 where the grinding mills are ball mills, hammer mills or pendulum mills.

12. A method according to any of the preceding claims wherein ash in step a) and the powder ground material PGM from step e) of claim 1 are mixed in step f) with a inorganic binder and water and, optionally, additives in a continuous mixer and sequentially treated in a pellettizing pan and cured to obtain artificial aggregates.

13. A method according to claim 12 wherein additives include accelerators, activators, retarders, plasticizers, superplasticizers, hydrophobic agents, air-entraining agents and mixtures thereof.

14. A method according to claim 12 wherein additives useful as cement superplasticizers are added to continuous mixer at the dosage from 0 to 10 per cent by mass of cementitious binder.

15. A method according to claim 12 wherein additives as cement superplasticizers comprise polycarboxylate ether (PCE) consisting of anionic and/or anionogenic groups monomers copolymerized with macromonomers with polyoxyalkylene chains.

16. A method according to claim 12 wherein the water-to-binder mass ratio is ranging from 0.1 to 2, preferably from 0.2 to 1.5, more preferably from 0.4 to 1.

17. A method according to claim 13 wherein additives useful as hydrophobic agents are added to the continuous mixer at the dosage from 0 to 10 per cent by mass of cementitious binder.

18. A method according to claim 17 wherein the hydrophobic agents comprise salts of fatty acids, silanes, siloxanes and mixtures thereof.

19. A method according to claim 13 wherein accelerating/activating additives are added to the continuous mixer at the dosage from 0 to 20 per cent by mass of cementitious binder.

20. A method according to claim 19 wherein the accelerating/activating additives comprise sodium thiocyanate, calcium nitrate, alkanolamines, metal silicate hydrate nano-seeds and mixtures thereof.

21. A method according to any of the preceding claims wherein the chloride-free granular material in step f) of claim 1 is cured at room temperature for times ranging from 48 hours to 90 days, preferably from 3 days to 60 days, more preferably for 7 days to 28 days to produce artificial aggregates.

22. A method according to any of claims 1 to 20 wherein the chloride-free granular material in step f) of claim 1 is steam-cured for times ranging from 2 hours to 48 hours, preferably from 6 hours to 24 hours, more preferably from 10 hours to 16 hours to produce artificial aggregates.

23. A method according to any of the preceding claims wherein the aggregate from step f) of claim 1) is wet conditioned in water by bubbling air or CO₂ to obtain aggregates with lower pH.

24. A method according to any of the preceding claims wherein the artificial aggregates are ground to the desired final particle size.

## Patentansprüche

1. Verfahren zur gleichzeitigen Herstellung von hochreinem festem Alkalichlorid und künstlichen zementartigen Zuschlagstoffen aus Feststoffverbrennungsanlagen, umfassend:
a) Mischen und Pelletieren von Asche mit einem anorganischen Bindemittel und Wasser sowie gegebenenfalls Additiven, um ein ausgehärtetes körniges Material zu erhalten,
b) Waschen des in Schritt a) hergestellten ausgehärteten körnigen Materials mit Wasser, um Alkalichlorid und andere lösliche Verbindungen zu entfernen,
c) Aufbereiten des Waschwassers aus Schritt b) über eine Umkehrosmosemembran,
d) Trocknen des Konzentrats aus Schritt c) mit einem Verdampfer, um ein festes Salz auf Alkalichloridbasis zu erhalten,
e) Mahlen des gewaschenen körnigen Materials aus Schritt b), um ein Pulver zu erhalten,
f) Mischen des pulverförmigen körnigen Materials aus Schritt e) mit einem anorganischen Bindemittel, Wasser und gegebenenfalls Zusatzstoffen sowie Pelletieren und Aushärten, um künstliches Zuschlagmaterial zu erhalten,
g) gegebenenfalls Nasskonditionieren des künstlichen Zuschlagmaterials aus Schritt f) in Wasser durch Einblasen von Luft oder CO₂ und
h) gegebenenfalls Mahlen und Sieben des künstlichen Zuschlagmaterials aus Schritt f) und Schritt g) auf die gewünschte Endpartikelgröße.

2. Verfahren gemäß Anspruch 1, wobei es sich bei der Asche um Flugasche handelt.

3. Verfahren gemäß Anspruch 1 oder 2, das in einem geschlossenen Kreislauf durchgeführt wird, wobei Wasser und die während des Verfahrens anfallenden festen Rückstände in den Schritten a) bis g) kontinuierlich recycelt werden.

4. Verfahren gemäß einem der vorstehenden Ansprüche, wobei in Schritt a) des Anspruchs 1 die Aschen mit einem anorganischen Bindemittel und Wasser sowie gegebenenfalls Additiven in einem Durchlaufmischer vermischt und anschließend in einer Pelletierpfanne behandelt werden, um ein körniges Material zu erhalten, das bei Raumtemperatur 48 Stunden bis 90 Tage, vorzugsweise 3 Tage bis 60 Tage, noch bevorzugter 7 Tage bis 28 Tage lang ausgehärtet wird.

5. Verfahren gemäß Anspruch 2, wobei in Schritt a) die FA [Flugaschen] mit einem anorganischen Bindemittel und Wasser sowie gegebenenfalls Additiven in einem Durchlaufmischer vermischt und anschließend in einer Pelletierpfanne behandelt werden, um ein körniges Material zu erhalten, das bei einer Temperatur von 40°C bis 70°C 2 Stunden bis 48 Stunden, vorzugsweise 6 Stunden bis 24 Stunden, noch bevorzugter 10 Stunden bis 16 Stunden lang dampfgehärtet wird.

6. Verfahren gemäß einem der vorstehenden Ansprüche, wobei in Schritt a) das Massenverhältnis von Asche zu Bindemittel im Bereich von 50:3, vorzugsweise von 20:5, noch bevorzugter von 10:7 liegt und das Verhältnis von Wasser zu Bindemittel im Bereich von 0,5:4, vorzugsweise von 0,7:3, noch bevorzugter von 1:2 liegt.

7. Verfahren gemäß einem der vorstehenden Ansprüche, wobei das anorganische Bindemittel Portlandzement, Calciumaluminatzement, Calciumsulfoaluminatzement, Magnesia-Zement, Schlacke, Flugasche aus Kohlekraftwerken und Mischungen davon ist, einschließlich anderer Zementzusatzstoffe wie Silikastaub, natürlicher Puzzolane, kalzinierter Tone und Kalkstein.

8. Verfahren gemäß einem der vorstehenden Ansprüche, wobei das in Schritt a) von Anspruch 1 hergestellte ausgehärtete körnige Material in Schritt b) nacheinander mit Wasser gewaschen wird, wobei das Massenverhältnis von Wasser zu ausgehärtetem körnigem Material zwischen 80:1 und 1, vorzugsweise zwischen 40:2 und 20:5, liegt.

9. Verfahren gemäß einem der vorstehenden Ansprüche, bei dem das aus Schritt b) von Anspruch 1 stammende Waschwasser mit gasförmigem CO₂ oder anderen sauren Lösungen behandelt wird, um den pH-Wert zu senken, durch Zugabe von Koagulierungsmitteln und Flockungsmitteln geklärt und ausgeflockt wird, gefiltert wird, um Schwebstoffe zu entfernen, und in Schritt c) über eine Umkehrosmosemembran behandelt wird, wobei das als Permeat anfallende reine Wasser für nachfolgende Waschzyklen in Schritt b) wiederverwendet wird und das Endkonzentrat in Schritt d) mittels Vakuumtrocknern oder Verdampfern getrocknet wird, um festes Alkalichlorid zu erhalten.

10. Verfahren gemäß einem der vorstehenden Ansprüche, wobei das gewaschene körnige Material aus Schritt b) des Anspruchs 1 in Schritt e) zu Pulver mit einer Feinheit von weniger als 2 mm gemahlen wird.

11. Verfahren gemäß Anspruch 10, wobei es sich bei den Mahlwerken um Kugelmühlen, Hammermühlen oder Pendelmühlen handelt.

12. Verfahren gemäß einem der vorstehenden Ansprüche, wobei die Asche aus Schritt a) und das pulverförmige Mahlgut (PGM) aus Schritt e) von Anspruch 1 in Schritt f) mit einem anorganischen Bindemittel und Wasser sowie gegebenenfalls Additiven in einem Durchlaufmischer vermischt und nacheinander in einer Pelletierpfanne behandelt und ausgehärtet werden, um künstliche Zuschlagstoffe zu erhalten.

13. Verfahren gemäß Anspruch 12, wobei die Zusatzstoffe Beschleuniger, Aktivatoren, Verzögerer, Weichmacher, Superplastifizierer, Hydrophobierungsmittel, Luftporenbildner und Mischungen davon umfassen.

14. Verfahren gemäß Anspruch 12, wobei als Zement-Superplastifizierer geeignete Zusatzstoffe dem Durchlaufmischer in einer Dosierung von 0 bis 10 Massenprozent des zementartigen Bindemittels zugegeben werden.

15. Verfahren gemäß Anspruch 12, wobei die als Zement-Superplastifizierer dienenden Additive Polycarboxylatether (PCE) umfassen, die aus Monomeren mit anionischen und/oder anionogenen Gruppen bestehen, die mit Makromonomeren mit Polyoxyalkylenketten copolymerisiert sind.

16. Verfahren gemäß Anspruch 12, wobei das Massenverhältnis von Wasser zu Bindemittel im Bereich von 0,1 bis 2, vorzugsweise von 0,2 bis 1,5, noch bevorzugter von 0,4 bis 1 liegt.

17. Verfahren gemäß Anspruch 13, wobei als hydrophobe Mittel geeignete Additive dem Durchlaufmischer in einer Dosierung von 0 bis 10 Massenprozent des zementartigen Bindemittels zugegeben werden.

18. Verfahren gemäß Anspruch 17, wobei die hydrophoben Mittel Salze von Fettsäuren, Silane, Siloxane und Mischungen davon umfassen.

19. Verfahren gemäß Anspruch 13, wobei Beschleunigungs-/Aktivierungsadditive dem Durchlaufmischer in einer Dosierung von 0 bis 20 Massenprozent des zementartigen Bindemittels zugegeben werden.

20. Verfahren gemäß Anspruch 19, wobei die Beschleunigungs-/Aktivierungsadditive Natriumthiocyanat, Calciumnitrat, Alkanolamine, Metallsilikathydrat-Nanokeime und Mischungen davon umfassen.

21. Verfahren gemäß einem der vorstehenden Ansprüche, wobei das chloridfreie körnige Material in Schritt f) von Anspruch 1 bei Raumtemperatur über Zeiträume von 48 Stunden bis 90 Tagen, vorzugsweise von 3 Tagen bis 60 Tagen, noch bevorzugter von 7 Tagen bis 28 Tagen ausgehärtet wird, um künstliche Zuschlagstoffe herzustellen.

22. Verfahren gemäß einem der Ansprüche 1 bis 20, wobei das chloridfreie körnige Material in Schritt f) von Anspruch 1 zur Herstellung künstlicher Zuschlagstoffe für Zeiträume von 2 Stunden bis 48 Stunden, vorzugsweise von 6 Stunden bis 24 Stunden, noch bevorzugter von 10 Stunden bis 16 Stunden, dampfgehärtet wird.

23. Verfahren gemäß einem der vorstehenden Ansprüche, wobei das Aggregat aus Schritt f) von Anspruch 1 in Wasser durch Einblasen von Luft oder CO₂ nasskonditioniert wird, um Aggregate mit niedrigerem pH-Wert zu erhalten.

24. Verfahren gemäß einem der vorstehenden Ansprüche, bei dem die künstlichen Aggregate auf die gewünschte Endpartikelgröße gemahlen werden.

## Revendications

1. Procédé de production simultanée de chlorure alcalin solide de haute pureté et d'agrégats cimentaires artificiels à partir d'installations d'incinération de déchets solides comprenant : a) le mélange et la granulation de cendres avec un liant inorganique et de l'eau et, facultativement des additifs, pour obtenir un matériau granulaire durci, b) le lavage à l'eau des matériaux granulaires durcis produits à l'étape a) pour éliminer le chlorure alcalin et d'autres composés solubles, c) le traitement de l'eau de lavage issue de l'étape b) sur une membrane d'osmose inverse, d) le séchage du concentré issu de l'étape c) au moyen d'un évaporateur pour obtenir un sel à base de chlorure alcalin solide, e) le broyage du matériau granulaire lavé issu de l'étape b) pour obtenir une poudre, f) le mélange du matériau granulaire en poudre issu de l'étape e) avec un liant inorganique, de l'eau et facultativement des additifs et la granulation et le durcissement pour obtenir un agrégat artificiel, g) facultativement le conditionnement par voie humide dans l'eau de l'agrégat artificiel issu de l'étape f) par insufflation d'air ou de CO₂ et h) facultativement le broyage et le tamisage de l'agrégat artificiel issu de l'étape f) et de l'étape g) jusqu'à la granulométrie finale souhaitée.

2. Procédé selon la revendication 1, dans lequel les cendres sont des cendres volantes.

3. Procédé selon la revendication 1 ou 2, mis en œuvre en circuit fermé dans lequel l'eau et les résidus solides générés au cours du processus sont recyclés en continu aux étapes a) à g).

4. Procédé selon l'une quelconque des revendications précédentes, dans lequel à l'étape a) de la revendication 1, les cendres sont mélangées à un liant inorganique et à de l'eau et, facultativement, à des additifs dans un mélangeur continu, puis sont successivement traitées dans un disque de granulation afin d'obtenir un matériau granulaire qui est durci à température ambiante pendant une durée allant de 48 heures à 90 jours, de préférence de 3 jours à 60 jours, plus préférentiellement de 7 jours à 28 jours.

5. Procédé selon la revendication 2, dans lequel, à l'étape a), les cendres volantes, FA, sont mélangées à un liant inorganique et à de l'eau et, facultativement, à des additifs dans un mélangeur continu, puis sont successivement traitées dans un disque de granulation afin d'obtenir un matériau granulaire qui est durci à la vapeur à une température comprise entre 40 °C et 70 °C pendant une durée allant de 2 heures à 48 heures, de préférence de 6 heures à 24 heures, plus préférentiellement de 10 heures à 16 heures.

6. Procédé selon l'une quelconque des revendications précédentes, dans lequel, à l'étape a), le rapport massique des cendres au liant se situe dans la plage de 50 à 3, de préférence de 20 à 5, plus préférentiellement de 10 à 7 et le rapport de l'eau au liant se situe dans la plage de 0,5 à 4, de préférence de 0,7 à 3, plus préférentiellement de 1 à 2.

7. Procédé selon l'une quelconque des revendications précédentes, dans lequel le liant inorganique est le ciment Portland, le ciment d'aluminate de calcium, le ciment de sulfoaluminate de calcium, le ciment de magnésie, le laitier, les cendres volantes provenant de centrales électriques au charbon et les mélanges de ceux-ci, y compris d'autres matériaux cimentaires supplémentaires, comme la fumée de silice, les pouzzolanes naturelles, les argiles calcinées et le calcaire.

8. Procédé selon l'une quelconque des revendications précédentes, dans lequel le matériau granulaire durci produit à l'étape a) de la revendication 1 est lavé successivement à l'étape b) avec de l'eau selon un rapport massique eau au matériau granulaire durci de 80 à 1, de préférence de 40 à 2, plus préférentiellement de 20 à 5.

9. Procédé selon l'une quelconque des revendications précédentes, dans lequel l'eau de lavage résultante de l'étape b) de la revendication 1 est traitée avec du CO₂ gazeux ou d'autres solutions acides pour abaisser le pH, soumise à une clarification-floculation par ajout d'agents coagulants et de floculants, filtrée pour éliminer les matières solides en suspension, et traitée au moyen d'une membrane d'osmose inverse à l'étape c), l'eau pure constituant le perméat étant recyclée pour des cycles de lavage ultérieurs à l'étape b) et le concentré final étant séché au moyen de sécheurs sous vide ou d'évaporateurs afin d'obtenir du chlorure alcalin solide à l'étape d).

10. Procédé selon l'une quelconque des revendications précédentes, dans lequel le matériau granulaire lavé issu de l'étape b) de la revendication 1 est broyé en une poudre d'une finesse inférieure à 2 mm à l'étape e).

11. Procédé selon la revendication 10, dans lequel les broyeurs sont des broyeurs à boulets, des broyeurs à marteaux ou des broyeurs pendulaires.

12. Procédé selon l'une quelconque des revendications précédentes, dans lequel les cendres de l'étape a) et le matériau en poudre broyé PGM issu de l'étape e) de la revendication 1 sont mélangés à l'étape f) à un liant inorganique et à de l'eau et, facultativement, à des additifs dans un mélangeur continu, et traités successivement dans un disque de granulation et durcies afin d'obtenir des agrégats artificiels.

13. Procédé selon la revendication 12, dans lequel les additifs comprennent des accélérateurs, des activateurs, des retardateurs, des plastifiants, des superplastifiants, des agents hydrophobes, des agents d'entraînement d'air et des mélanges de ceux-ci.

14. Procédé selon la revendication 12, dans lequel des additifs utiles en tant que superplastifiants pour ciment sont ajoutés dans le mélangeur continu à la dose de 0 à 10 pour cent en masse de liant cimentaire.

15. Procédé selon la revendication 12, dans lequel les additifs en tant que superplastifiants pour ciment comprennent un éther de polycarboxylate (PCE) constitué de monomères comportant des groupes anioniques et/ou anionogènes copolymérisés avec des macromonomères comportant des chaînes polyoxyalkylène.

16. Procédé selon la revendication 12, dans lequel le rapport massique eau au liant est compris entre 0,1 et 2, de préférence entre 0,2 et 1,5, plus préférentiellement entre 0,4 et 1.

17. Procédé selon la revendication 13, dans lequel des additifs utiles en tant qu'agents hydrophobes sont ajoutés au mélangeur continu à la dose de 0 à 10 pour cent en masse de liant cimentaire.

18. Procédé selon la revendication 17, dans lequel les agents hydrophobes comprennent des sels d'acides gras, des silanes, des siloxanes et des mélanges de ceux-ci.

19. Procédé selon la revendication 13, dans lequel des additifs accélérateurs/activateurs sont ajoutés au mélangeur continu à la dose de 0 à 20 pour cent en masse de liant cimentaire.

20. Procédé selon la revendication 19, dans lequel les additifs accélérateurs/activateurs comprennent le thiocyanate de sodium, le nitrate de calcium, les alcanolamines, les nano-germes de silicate métallique hydraté et les mélanges de ceux-ci.

21. Procédé selon l'une quelconque des revendications précédentes, dans lequel le matériau granulaire exempt de chlorure à l'étape f) de la revendication 1 est durci à température ambiante pendant des durées allant de 48 heures à 90 jours, de préférence de 3 jours à 60 jours, plus préférentiellement de 7 jours à 28 jours afin de produire des agrégats artificiels.

22. Procédé selon l'une quelconque des revendications 1 à 20, dans lequel le matériau granulaire exempt de chlorure à l'étape f) de la revendication 1 est durci à la vapeur pendant des durées allant de 2 heures à 48 heures, de préférence de 6 heures à 24 heures, plus préférentiellement de 10 heures à 16 heures afin de produire des agrégats artificiels.

23. Procédé selon l'une quelconque des revendications précédentes, dans lequel l'agrégat de l'étape f) de la revendication 1) est facultativement conditionné par voie humide dans de l'eau par barbotage d'air ou de CO₂ afin d'obtenir des agrégats présentant un pH plus faible.

24. Procédé selon l'une quelconque des revendications précédentes, dans lequel les agrégats artificiels sont facultativement broyés jusqu'à la granulométrie finale souhaitée.
